# EUROPEAN PATENT APPLICATION

(11) **EP 4 769 711 A1**
(43) Date of publication of application: **01.07.2026**
(21) Application number: 24880955.0
(22) Date of filing: 22.04.2024
(51) Int. Cl.: H01M 50/24, H01M 50/30, H01M 50/258

(54) **BOX BODY, BATTERY, AND ELECTRICAL DEVICE**

(30) Priority: 24.10.2023 CN 202311380306
(71) Applicant: Contemporary Amperex Technology Co., Limited, Ningde, Fujian 352100 (CN)
(72) Inventor: LIAO, Boxiang, Ningde, Fujian 352100 (CN); QIN, Feng, Ningde, Fujian 352100 (CN); YANG, Haiqi, Ningde, Fujian 352100 (CN); JIANG, Tianyu, Ningde, Fujian 352100 (CN)
(74) Representative: Gong, Jinping
(86) International application number: PCT/CN2024/089155
(87) International publication number: WO 2025/086576

(57) **Abstract**

Embodiments of the present application provide a box body (10), a battery **(1100),** and an electrical device, the box body (10) comprising a main box body (100) and a separator (200). Through holes (101) are formed on the main box body (100), and the separator (200) is arranged in the main box body (100) and blocks the through holes (101). The separator (200) is configured to be melted through when thermal runaway occurs in a battery cell (20). In the embodiments of the present application, the separator (200) can block the through holes (101), such that the inside and outside of the main box body (100) are not in communication, and impurities such as metal particles outside of the main box body (100) cannot enter the main box body (100) from the through holes (101), thereby reducing the probability of insulation failure caused by metal particles outside of the main box body (100) entering the main box body (100). Moreover, the separator (200) can be melted though by heat generated by thermal runaway to promptly discharge heat, reducing the hidden danger of combustion or explosion caused by the occurrence of heat accumulation.

## Description

The present application refers to Chinese Patent Application No. 202311380306.X filed on October 24, 2023, and entitled "CASE, BATTERY, AND ELECTRIC DEVICE", which is incorporated herein by reference in its entirety.

### TECHNICAL FIELD

The present application relates to the technical field of battery structures, and in particular, to a case, a battery, and an electric device.

### BACKGROUND

Through holes are typically formed in the case of a battery, such that, when thermal runaway occurs in battery cells inside the case, the high-temperature gas generated due to thermal runaway can be discharged to the outside of the case through the through holes, thereby preventing the risk of combustion or explosion caused by heat accumulation inside the case.

However, when the technical solution of providing through holes on the case is employed, external impurity particles may enter the case through the through holes. For example, metal particles outside the bottom plate or on the bottom protective plate of the case enter the case through the through holes, potentially resulting in insulation failure within the case.

### SUMMARY

An objective of embodiments of the present application is to provide a case, a battery, and an electric device, with the aim of solving the problem in the related art that providing through holes in the bottom plate of the case to address thermal runaway may lead to the ingress of external metal particles into the case and thus cause insulation failure.

To achieve the above objective, the embodiments of the present application adopt the following technical solutions:

In a first aspect, the embodiments of the present application provide a case configured to accommodate a battery cell. The case includes a case body and a partition member. The case body is provided with a through hole, the partition member is disposed on the case body, and the partition member blocks the through hole at a location thereof. The partition member is configured to be capable of being melted through when thermal runaway occurs in the battery cell.

Beneficial effects of the embodiments of the present application: According to the case provided in the embodiments of the present application, since the case body is provided with a through hole, and a partition member is disposed on the case body to block the through hole, under normal operating conditions, the partition member can block the through hole, such that the interior and exterior of the case body are not in communication, and impurities such as metal particles outside the case body cannot enter the case body through the through hole, thereby reducing the probability of insulation failure caused by the ingress of metal particles outside the case body into the case body. In addition, when thermal runaway occurs in the battery cell in the case, the partition member can be melted through by heat generated during the thermal runaway, such that the through hole is opened, and the heat inside the case body can be promptly discharged, thereby reducing the potential risk of combustion or explosion due to heat accumulation.

In some embodiments, a part of the partition member is recessed toward the case body to form a recess portion, and the recess portion is inserted into the through hole.

By employing the above technical solution, when the partition member is assembled on the case body, the recess portion of the partition member may be inserted into the through hole to achieve the objective of positioning assembly, thereby effectively improving assembly efficiency.

In some embodiments, the case further includes a first anti-fire member, the recess portion has a connection surface disposed opposite to the case body, and the first anti-fire member is disposed on the connection surface.

By employing the above technical solution, since the first anti-fire member is disposed on the connection surface of the recess portion, when thermal runaway occurs in one of the battery cells in the case body, the high-temperature gas generated in the battery cell due to the thermal runaway melts through the corresponding recess portion and is discharged from the corresponding through hole to the outside of the case body. When the discharged high-temperature gas diffuses outside the case body, the discharged high-temperature gas can be blocked by the first anti-fire member disposed on the recess portion inserted into other through holes, thereby reducing the potential risk of thermal runaway propagation.

In some embodiments, the partition member is disposed on an inner surface of the case body.

By employing the above technical solution, the partition member is disposed on the inner surface of the case body, and the partition member blocks the through hole on the case body on one side inside the case body, thereby preventing impurities such as metal particles outside the case body from entering the interior of the case body.

In some embodiments, the partition member includes at least one of a paraffin layer body, a plastic layer body, and a gelatin layer body.

By employing the above technical solution, when thermal runaway occurs in the battery cell in the case body, the heat generated due to the thermal runaway in the battery cell can melt through the partition member, such that the through hole can establish communication between the interior and exterior of the case body, and the heat generated due to the thermal runaway in the battery cell can be discharged from the through hole.

In some embodiments, the case body includes a bottom plate, the through hole is formed in the bottom plate, and the partition member is disposed on a surface of the bottom plate proximal to the battery cell. An anti-explosion valve of the battery cell faces the partition member.

By employing the above technical solution, the through hole is formed in the bottom plate of the case body, the partition member is disposed on the surface of the bottom plate proximal to the battery cell to block the through hole, and the anti-explosion valve of the battery cell in the case body faces the partition member, such that when thermal runaway occurs in the battery cell, the high-temperature gas generated due to the thermal runaway can be discharged from the anti-explosion valve of the battery cell and contact the partition member, and the partition member can be promptly melted through to open the through hole, thereby enabling the high-temperature gas generated due to the thermal runaway in the battery cell to be discharged from the through hole more promptly, and reducing the probability of heat accumulation in the case body.

In some embodiments, the bottom plate is provided with a plurality of through holes, and at least a part of the through holes are spaced apart from each other along a first direction of the bottom plate to form a hole group. One or more hole groups are formed on the bottom plate, and when the number of the hole groups is at least two, the hole groups are spaced apart from each other along a second direction of the bottom plate. The first direction intersects with the second direction.

By employing the above technical solution, the through holes formed in the bottom plate can be arranged along the first direction of the bottom plate to form a hole group, and when at least two hole groups are formed, the hole groups can be spaced apart from each other along the second direction of the bottom plate, such that when the battery cell is assembled in the case body, a plurality of battery cells can be arranged along the first direction of the bottom plate, and a plurality of rows of battery cells can be spaced apart from each other along the second direction of the bottom plate. Therefore, the anti-explosion valve of each battery cell can be disposed corresponding to a respective through hole, thereby improving the efficiency in addressing thermal runaway in the battery cells.

In some embodiments, the number of the partition members is the same as the number of the hole groups, and each partition member is configured to block all the through holes at locations thereof in the corresponding hole group.

By employing the above technical solution, a plurality of partition members are used to block the through holes of the corresponding hole groups, respectively, thereby reducing the amount of material required for the partition members and achieving the objective of cost reduction.

In some embodiments, the case further includes a bottom protective plate, the bottom protective plate is disposed on an outer side of the bottom plate, and the bottom protective plate and the bottom plate are spaced apart to form an exhaust channel, the exhaust channel being in communication with an exterior of the bottom protective plate, and the through hole being in communication with the exhaust channel.

By employing the above technical solution, since the bottom protective plate and the bottom plate are spaced apart to form an exhaust channel, when thermal runaway occurs in the battery cell in the case, the high-temperature gas generated due to the thermal runaway in the battery cell melts through the partition member that blocks the through hole, such that the high-temperature gas can be discharged from the through hole into the exhaust channel and then discharged to the outside of the bottom protective plate through the exhaust channel.

In some embodiments, a second anti-fire member is disposed on a surface of one side, facing the bottom plate, of the bottom protective plate.

By employing the above technical solution, since the second anti-fire member is disposed on the surface of one side, facing the bottom plate, of the bottom protective plate, when thermal runaway occurs, and the high-temperature gas is discharged from the case body into the exhaust channel through the through hole, the second anti-fire member can protect the bottom protective plate, thereby reducing the probability of damage to the bottom protective plate caused by the high-temperature gas.

In some embodiments, the partition member includes a partition portion and a surrounding barrier portion, the partition portion is disposed on the inner surface of the case body and is at least partially configured to block the through hole, and the surrounding barrier portion is disposed on a surface of one side, facing an interior of the case body, of the partition portion.

By employing the above technical solution, the partition portion of the partition member can be configured to block the through hole, and the surrounding barrier portion of the partition member can serve as a surrounding barrier to prevent the adhesive from entering the surrounding barrier portion when the adhesive is applied to the case body, thereby reducing the probability of the adhesive contacting the anti-explosion valve of the battery cell, and thus reducing the probability of failure of the anti-explosion valve.

In some embodiments, along a thickness direction of the partition portion, a projection of the surrounding barrier portion is configured to be capable of surrounding a projection of the anti-explosion valve of the battery cell.

By employing the above technical solution, the projection of the surrounding barrier portion is capable of surrounding the projection of the anti-explosion valve of the battery cell, such that the surrounding barrier portion is capable of functioning to protect the anti-explosion valve in a surrounding configuration, and the probability of the adhesive contacting the anti-explosion valve of the battery cell is further reduced, thereby further reducing the probability of failure of the anti-explosion valve.

In some embodiments, the surrounding barrier portion includes two first surrounding barrier structures disposed opposite to each other and two second surrounding barrier structures disposed opposite to each other, both the first surrounding barrier structures and the second surrounding barrier structures are disposed on the partition portion, and two opposite ends of each of the first surrounding barrier structures are respectively connected to the two second surrounding barrier structures. A height of the first surrounding barrier structure is less than a height of the second surrounding barrier structure.

By employing the above technical solution, when the battery cell is assembled into the case body, the battery cell compresses the surrounding barrier portion and is assembled on the case body. Due to the height difference between the first surrounding barrier structure and the second surrounding barrier structure of the surrounding barrier portion, the reaction force from the first surrounding barrier structure on the battery cell can be reduced. Accordingly, the elastic force exerted by the surrounding barrier portion on the battery cell is effectively decreased, thereby reducing the probability of the battery cell being bounced upward.

In a second aspect, the embodiments of the present application further provide a battery. The battery includes a battery cell and the above case. The battery cell is disposed in the case body of the case.

Beneficial effects of the embodiments of the present application: The battery provided in the embodiments of the present application includes the above case. On the basis that, for the case described above, the partition member can be used for blocking the through hole to reduce the probability of insulation failure caused by the ingress of metal particles outside the case body into the case body, the probability of insulation failure of the battery is also relatively low.

In some embodiments, a number of the battery cells is plural, the plurality of battery cells are accommodated in the case body, and the anti-explosion valve of each of the battery cells faces the corresponding through hole formed in the case body.

By employing the above technical solution, since the anti-explosion valve of each battery cell faces the corresponding through hole formed in the case body, when thermal runaway occurs in any one battery cell, the high-temperature gas generated due to the thermal runaway in the battery cell can be discharged from the anti-explosion valve to the through hole, such that the partition member that blocks the through hole is melted through, and the high-temperature gas can be promptly discharged out of the case body.

In a third aspect, the embodiments of the present application further provide an electric device. The electric device includes the above battery.

Beneficial effects of the embodiments of the present application: The electric device provided in the embodiments of the present application includes the above battery. On the basis of the relatively low probability of insulation failure of the above battery, the probability of electrical leakage of the electric device is also lower.

### BRIEF DESCRIPTION OF THE DRAWINGS

To more clearly illustrate the technical solutions in the embodiments of the present application, the drawings required for illustrating the embodiments or description of the prior art are briefly described below. Apparently, the drawings in the following description illustrate merely some embodiments of the present application, and those of ordinary skill in the art may still derive other drawings from these drawings without creative efforts.
FIG. 1 is a structural schematic view of a vehicle according to some embodiments of the present application;
FIG. 2 is an exploded view of a battery according to some embodiments of the present application;
FIG. 3 is an exploded structural schematic view of a battery cell according to some embodiments of the present application;
FIG. 4 is a structural schematic view of the assembly of battery cells in a case body according to some embodiments of the present application;
FIG. 5 is a structural schematic view of a case body and battery cells according to some embodiments of the present application;
FIG. 6 is a partial enlarged schematic view of A in FIG. 5;
FIG. 7 is a structural schematic view of the interior of a case body according to some embodiments of the present application; and
FIG. 8 is a schematic structural view of a partition member according to some embodiments of the present application.

Reference numerals in the drawings have the following meanings:
1000: vehicle; 1100: battery; 1200: controller; 1300: motor;
10: case; 11: first part; 12: second part;
20: battery cell; 21: end cover; 21a: electrode terminal; 22: housing; 23: battery cell assembly; 23a: tab; 24: anti-explosion valve;
100: case body; 101: through hole; 102: hole group; 110: bottom plate;
200: partition member; 210: recess portion; 211: connection surface; 220: partition portion; 230: surrounding barrier portion; 231: first surrounding barrier structure; 232: second surrounding barrier structure;
300: first anti-fire member;
400: bottom protective plate; 410: exhaust channel;
500: second anti-fire member;
D: first direction; H: second direction; M: thickness direction.

### DETAILED DESCRIPTION

Embodiments of the present application are described in detail hereinafter, with examples of the embodiments illustrated in the drawings. Throughout the drawings, the same or similar reference numbers indicate the same or similar elements or elements having the same or similar functions. The embodiments described hereinafter with reference to the drawings are exemplary and are intended to explain the present application. They should not be construed as limiting the present application.

In the description of the embodiments of the present application, it should be understood that the terms "length", "width", "upper", "lower", "front", "rear", "left", "right", "vertical", "horizontal", "top", "bottom", "inner", "outer", and the like indicate orientations or positional relationships based on those shown in the drawings. They are merely for the convenience of describing the embodiments of the present application and simplifying the description, rather than indicating or implying that the apparatus or element referred to must have a specific orientation or be constructed and operated in the specific orientation, and thus should not be construed as a limitation to the embodiments of the present application.

In addition, the terms "first" and "second" are used for description only and are not to be construed as indicating or implying relative importance or to implicitly indicate the number of technical features indicated. Therefore, a feature defined with "first" or "second" may explicitly or implicitly include one or more such a feature. In the description of the embodiments of the present application, unless otherwise explicitly and specifically defined, "plurality of" means two or more.

In the embodiments of the present application, unless otherwise explicitly specified and defined, the terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the embodiments of the present application can be interpreted according to specific conditions.

At present, judging from the trends in the market, the application of power batteries is becoming increasingly widespread. Power batteries are not only applied in energy storage power systems such as hydropower, thermal power, wind power, and solar power stations, but also widely applied in electric transportation vehicles such as electric bicycles, electric motorcycles, or electric cars, as well as in military equipment, aerospace, and other fields. With the continuous expansion of the application field of power batteries, the market demand for power batteries is also constantly increasing.

The battery includes a case and a plurality of battery cells assembled in the case. During use of the battery, the battery cells inside the battery are subject to the risk of thermal runaway. The battery cells discharge high-temperature gas carrying a large amount of heat through the anti-explosion valve when thermal runaway occurs. The accumulation of the high-temperature gas carrying a large amount of heat inside the case poses a risk of combustion or even explosion of the battery.

To reduce the risk of combustion or explosion caused by the accumulation of heat in the case, in the related art, through holes are formed in the case of the battery to enable the interior and the exterior of the case to be in communication via the through holes. Even when thermal runaway occurs in the battery cell, the high-temperature gas generated due to the thermal runaway in the battery cell can be discharged from the through hole to the outside of the case, such that the risk of high-temperature gas accumulation in the case can be reduced, thereby reducing the risk of combustion or explosion of the battery cell. However, when the technical solution of providing through holes on the case is employed, external impurity particles may enter the case through the through holes. For example, metal particles outside the bottom plate or on the bottom protective plate of the case enter the case through the through holes, potentially resulting in insulation failure within the case and thus posing a risk of electrical leakage.

Based on the above consideration, to solve the problem that providing through holes in the case to address thermal runaway may lead to the ingress of external metal particles into the case and thus cause insulation failure, a case is designed. Through holes are provided in the case body of the case, and a partition member is disposed on the case body to block the through hole, such that external impurities such as metal particles cannot enter the case body through the through hole. In addition, when thermal runaway occurs, the high-temperature gas generated due to the thermal runaway can melt through the partition member, and the high-temperature gas can be discharged to the outside of the case body through the through hole.

The case according to the present application is capable of satisfying requirements for addressing thermal runaway. The high-temperature gas generated due to thermal runaway can melt through the partition member, and then be discharged to the outside of the case body through the through hole. In addition, under a normal state where thermal runaway does not occur, the partition member can prevent impurities such as metal particles outside the case body from entering the case body, to reduce the risk of insulation failure caused by the ingress of impurities such as metal particles into the case body, thereby reducing the risk of electrical leakage.

The case disclosed in the embodiments of the present application can be used in electric devices that use batteries as the power source or in various energy storage systems that use batteries as the energy storage element. The electric device may be, but is not limited to, a mobile phone, a tablet, a laptop computer, an electric toy, an electric tool, an electric bicycle, an electric vehicle, a ship, a spacecraft, or the like. The electric toy may include stationary or mobile electric toys, such as game consoles, electric car toys, electric ship toys, or electric airplane toys. The spacecraft may include airplanes, rockets, space shuttles, spaceships, and the like.

In the following embodiments, for ease of description, the present application is illustrated by taking a vehicle 1000 as an example of the electric device according to an embodiment of the present application.

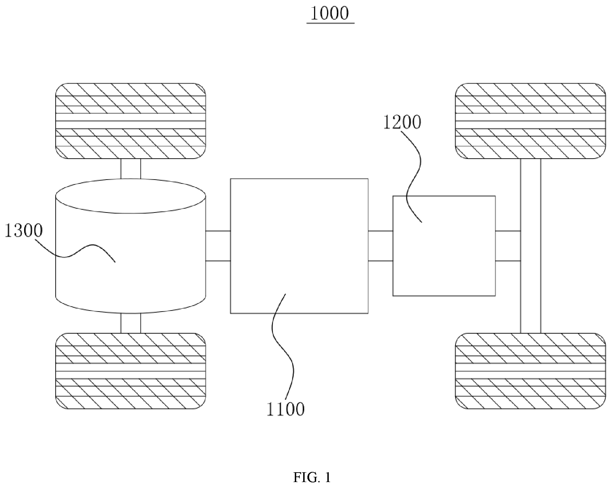

Referring to FIG. 1, FIG. 1 is a structural schematic view of a vehicle 1000 according to some embodiments of the present application. The vehicle 1000 may be a fuel vehicle, a gas vehicle, or a new energy vehicle. The new energy vehicle may be a pure electric vehicle, a hybrid vehicle, an extended-range vehicle, or the like. A battery 1100 is provided inside the vehicle 1000, and the battery 1100 may be provided at the bottom, head, or tail of the vehicle 1000. The battery 1100 may be configured to power the vehicle 1000. For example, the battery 1100 may serve as an operation power source of the vehicle 1000. The vehicle 1000 may further include a controller 1200 and a motor 1300. The controller 1200 is configured to control the battery 1100 to supply power to the motor 1300, e.g., for operation power needed by the vehicle 1000 for start-up, navigation, and driving.

In some embodiments of the present application, the battery 1100 may not only serve as an operation power source for the vehicle 1000, but also as a driving power source for the vehicle 1000 to, instead of or in part instead of fuel or natural gas, provide driving power for the vehicle 1000.

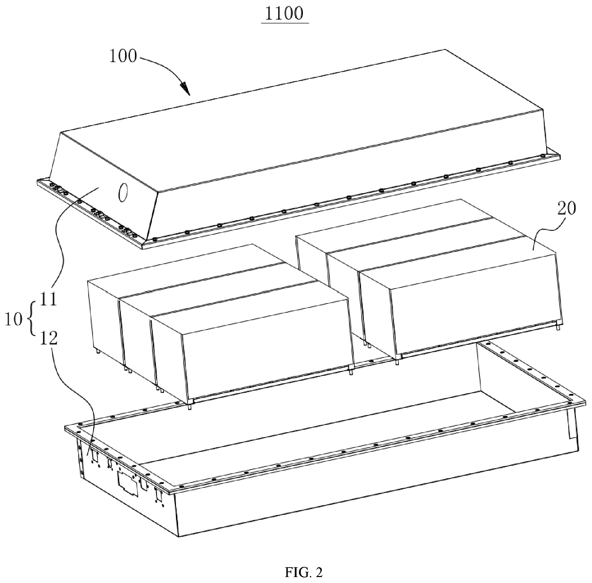

Referring to FIG. 2, FIG. 2 is an exploded view of a battery 1100 according to some embodiments of the present application. The battery 1100 includes a case 10 and battery cells 20. The battery cells 20 are accommodated in the case 10. The case 10 is configured to provide an accommodating space for the battery cells 20, and the case 10 may be of a variety of structures. In some embodiments, the case 10 may include a first part 11 and a second part 12. The first part 11 and the second part 12 are mutually lidded onto each other, and the first part 11 and the second part 12 jointly define an accommodating space for accommodating the battery cells 20. The second part 12 may be of a hollow structure with one end open, and the first part 11 may be of a plate-shaped structure. The first part 11 is lidded onto the open side of the second part 12, such that the first part 11 and the second part 12 jointly define the accommodating space. The first part 11 and the second part 12 may also each be of a hollow structure with one side open, and the open side of the first part 11 is lidded onto the open side of the second part 12. Certainly, the case 10 formed by the first part 11 and the second part 12 may be in various shapes, such as a cylindrical shape and a rectangular parallelepiped shape.

In the battery 1100, there may be a plurality of battery cells 20, and the plurality of battery cells 20 may be connected in series, in parallel, or in series-parallel. The series-parallel connection means that both series connection and parallel connection are present for the connection among the plurality of battery cells 20. The plurality of battery cells 20 may be directly connected in series, in parallel, or in series-parallel, and then the whole formed by the plurality of battery cells 20 is accommodated in the case 10. Certainly, the situation may be that in the battery 1100, the plurality of battery cells 20 are first connected in series, in parallel, or in series-parallel to form battery modules, and then the plurality of battery modules are connected in series, in parallel, or in series-parallel to form a whole and accommodated in the case 10. The battery 1100 may further include other structures. For example, the battery 1100 may further include a busbar component for achieving electrical connection among the plurality of battery cells 20.

Each battery cell 20 may be a secondary battery or a primary battery; it may also be a lithium-sulfur battery, a sodium-ion battery, or a magnesium-ion battery, but is not limited thereto. The battery cell 20 may be cylindrical, flat, rectangular parallelepiped-shaped, or in other shapes.

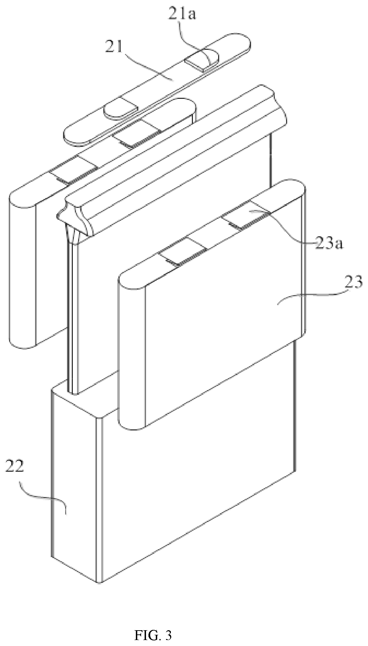

Referring to FIG. 3, FIG. 3 is an exploded structural schematic view of a battery cell 20 according to some embodiments of the present application. The battery cell 20 refers to the smallest unit forming a battery. As illustrated in FIG. 3, the battery cell 20 includes an end cover 21, a housing 22, a battery cell assembly 23, and other functional components.

The end cover 21 is a component that is lidded onto the opening of the housing 22 to isolate the internal environment of the battery cell 20 from the external environment. Without limitation, the shape of the end cover 21 may be adapted to the shape of the housing 22 to match the housing 22. Optionally, the end cover 21 may be made of a material with a certain hardness and strength (for example, an aluminum alloy), such that the end cover 21 is not easily deformed when being squeezed or collided. This enables the battery cell 20 to have higher structural strength, and the safety performance can also be improved. Functional components such as an electrode terminal 21a may be provided on the end cover 21. The electrode terminal 21a may be configured to be electrically connected to the battery cell assembly 23 to output or input the electrical energy of the battery cell 20. In some embodiments, the end cover 21 may also be provided with a pressure relief mechanism, such as an anti-explosion valve, for releasing the internal pressure when the internal pressure or temperature of the battery cell 20 reaches the threshold. The end cover 21 may also be made of a variety of materials, such as copper, iron, aluminum, stainless steel, aluminum alloy, and plastic, which is not specifically limited in the embodiments of the present application. In some embodiments, an insulating member may also be provided on the inner side of the end cover 21, and the insulating member may be configured to isolate an electrical connection component in the housing 22 from the end cover 21 to reduce the risk of a short circuit. Illustratively, the insulating member may be made of plastic, rubber, or the like.

The housing 22 is a component configured to form the internal environment of the battery cell 20 in combination with the end cover 21. The formed internal environment may be used to accommodate the battery cell assembly 23, the electrolyte, and other components. The housing 22 and the end cover 21 may be independent components. An opening may be formed in the housing 22, and the end cover 21 is lidded onto the opening to form the internal environment of the battery cell 20. Without limitation, the end cover 21 and the housing 22 may be integrated. Specifically, the end cover 21 and the housing 22 may form a common assembly surface before other components are placed in the housing, and when the interior of the housing 22 needs to be encapsulated, the end cover 21 is lidded onto the housing 22. The housing 22 may be in various shapes and sizes, such as a rectangular parallelepiped, a cylinder, and a hexagonal prism. Specifically, the shape of the housing 22 may be determined based on the specific shape and size of the battery cell assembly 23. The housing 22 may be made of a plurality of materials, such as copper, iron, aluminum, stainless steel, aluminum alloy, and plastic, which is not specifically limited in the embodiments of the present application.

The battery cell assembly 23 is a component where the electrochemical reaction occurs in the battery cell 1100. One or more battery cell assemblies 23 may be accommodated in the housing 22. The battery cell assembly 23 is mainly formed by winding or stacking a positive electrode plate and a negative electrode plate, and a separator is generally provided between the positive electrode plate and the negative electrode plate. The portions of the positive electrode plate and the negative electrode plate that contain active substances constitute the body part of the battery cell assembly, and the portions of the positive electrode plate and the negative electrode plate that do not contain active substances each constitute a tab 23a. The positive electrode tab and the negative electrode tab may be located together at one end of the body part or separately at two ends of the body part. During charging and discharging of the battery, the positive electrode active substance and the negative electrode active substance react with the electrolyte, and the tabs 23a are connected to the electrode terminals to form a current circuit.

The case provided in the embodiments of the present application is described below.

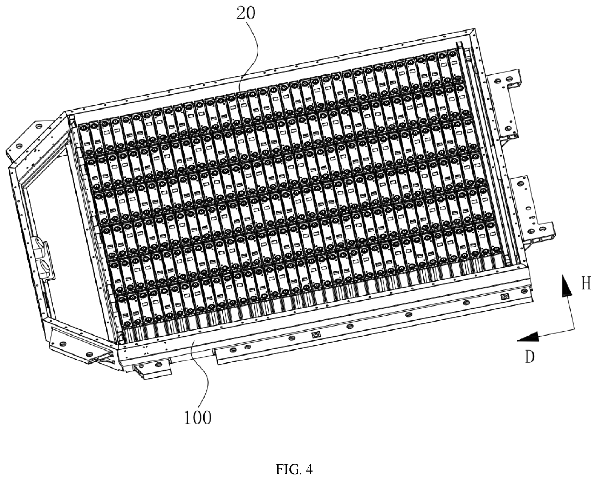

According to some embodiments of the present application, referring to FIGs. 2, 4, and 7, the embodiments of the present application provide a case 10 configured to accommodate a battery cell 20. The case 10 includes a case body 100 and a partition member 200. The case body 100 is provided with a through hole 101, the partition member 200 is disposed on the case body 100, and the partition member 200 blocks the through hole 101 at a location thereof. The partition member 200 is configured to be capable of being melted through when thermal runaway occurs in the battery cell 20.

The case body 100 is the main structure of the case 10, and the case body 100 may include a first part 11 and a second part 12. Therefore, for the through hole 101 formed in the case body 100, the through hole 101 may be specifically formed in the first part 11, or may be provided in the second part 12, or both the first part 11 and the second part 12 may be provided with the through hole 101.

The through hole 101 is capable of penetrating through the case body 100 and allowing communication between the interior and the exterior of the case body 100. Specifically, the through hole 101 may be, but is not limited to, a circular hole, a waist-shaped hole, a rectangular hole, a strip-shaped hole, or the like.

The partition member 200 is configured to block the through hole 101. Specifically, the partition member 200 may be fixedly assembled on the case body 100, for example, fixedly connected to the case body 100 by means of adhesive bonding, fastener fixation, snap-fit connection, or the like. The partition member 200 may be fixedly assembled on the surface of the inner side of the case body 100, or the partition member 200 may also be fixedly assembled on the surface of the outer side of the case body 100; or the partition member 200 may also be inserted into the through hole 101 and block the through hole 101. The inner side of the case body 100 refers to one side of the case body 100 for accommodating the battery cell 20, and the outer side of the case body 100 refers to the other side opposite to the inner side.

The partition member 200 may be, but is not limited to, a partition plate, a partition block, a partition column, or the like. The number of the partition members 200 may be one or more. One partition member 200 can be configured to block only one through hole 101. Alternatively, one partition member 200 may block a plurality of through holes 101 simultaneously.

The partition member 200 can be melted through when thermal runaway occurs in the battery cell 20, such that the through hole 101 is opened, and the high-temperature gas that is generated due to the thermal runaway in the battery cell 20 and carries a large amount of heat can be discharged from the through hole 101 to the outside of the case body 100. Specifically, the partition member 200 may be a fusible material with a low melting point, such as plastic or paraffin. Alternatively, the partition member 200 may be a combustible material with a low ignition point, such as paper or a fiber layer. The high-temperature gas generated due to thermal runaway can melt through or burn through the partition member 200, thereby opening the through hole 101.

According to the case 10 provided in the embodiments of the present application, since the case body 100 is provided with a through hole 101, and a partition member 200 is disposed on the case body 100 to block the through hole 101, under normal operating conditions, the partition member 200 can block the through hole 101, such that the interior and exterior of the case body 100 are not in communication, and impurities such as metal particles outside the case body 100 cannot enter the case body 100 through the through hole 101, thereby reducing the probability of insulation failure caused by the ingress of metal particles outside the case body 100 into the case body 100, and thus decreasing the probability of electrical leakage. In addition, when thermal runaway occurs in the battery cell 20 in the case 10, the partition member 200 can be melted through by heat generated during the thermal runaway, such that the through hole 101 is opened, and the heat inside the case body 100 can be promptly discharged, thereby preventing the potential risk of combustion or explosion due to heat accumulation.

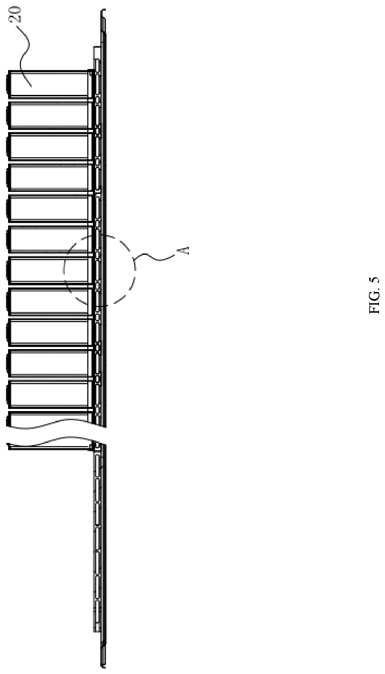

Referring to FIGs. 5 to 7, in some embodiments, a part of the partition member 200 is recessed toward the case body 100 to form a recess portion 210, and the recess portion 210 is inserted into the through hole 101.

The recess portion 210 is formed by a part of the partition member 200 being recessed in the direction of the through hole 101, and the recess portion 210 is configured to be inserted into the through hole 101, such that the partition member 200 can be positioned and mounted by means of an insertion fit between the recess portion 210 and the through hole 101.

Specifically, the recess portion 210 may be, but is not limited to, a columnar protrusion, a spherical protrusion, a block-shaped protrusion, or the like. Alternatively, the shape and configuration of the recess portion 210 may be adapted to the corresponding through hole 101. The above through hole 101 corresponding to the recess portion 210 refers to the through hole 101 into which the recess portion 210 is to be inserted. By configuring the shape and configuration of the recess portion 210 to be adapted to or substantially the same as the corresponding through hole 101, the recess portion 210 can be more easily inserted into the corresponding through hole 101 to achieve assembly.

It is to be understood that the number of the recess portions 210 formed on the partition member 200 may be the same as the number of the through holes 101 blocked by the partition member 200, or the number of the recess portions 210 may be less than the number of the blocked through holes 101. Illustratively, when one partition member 200 is configured to block x through holes 101, one recess portion 210 may be formed on the partition member 200, and the recess portion 210 is inserted into the corresponding through hole 101 to position and mount the partition member 200, while other parts of the partition member 200 can block other x-1 through holes 101 at the locations thereof, where x may be an integer greater than or equal to 1. Alternatively, when one partition member 200 is configured to block y through holes 101, a number of recess portions 210 greater than one but less than y may be formed on the partition member 200, and the recess portions 210 are respectively inserted into the corresponding through holes 101 to achieve positioning and guiding assembly of the partition member 200, such that other parts of the partition member 200 can block through holes 101 that are not inserted with the recess portion 210 in the y through holes 101, where y may be an integer greater than 2. Alternatively, when one partition member 200 is configured to block z through holes 101, z recess portions 210 may be formed on the partition member 200, and the positioning and guiding assembly of the partition member 200 may be achieved by inserting the recess portions 210 into the corresponding through holes 101, where the above z may be an integer greater than or equal to 2.

Due to such an arrangement, when the partition member 200 is assembled on the case body 100, the recess portion 210 of the partition member 200 may be inserted into the corresponding through hole 101 to achieve the objective of positioning assembly, thereby effectively improving assembly efficiency.

Referring to FIGs. 5 to 7, in some embodiments, the case 10 further includes a first anti-fire member 300, the recess portion 210 has a connection surface 211 disposed opposite to the case body 100, and the first anti-fire member 300 is disposed on the connection surface 211.

The first anti-fire member 300 is configured to reduce the risk of unintended melting-through of the recess portion 210 caused by high-temperature gas outside the case body 100. The first anti-fire member 300 may be a structural member with anti-fire effects, and for example, may be a fire-resistant coating layer, a fire-resistant patch, or a fire-resistant adhesive. The first anti-fire member 300 may be fixed to the recess portion 210 by coating, adhesion, or other methods.

The connection surface 211 refers to the surface of one side of the recess portion 210 on which the first anti-fire member 300 is disposed. It should be understood that the connection surface 211 is disposed opposite to the case body 100, that is, the connection surface 211 is the surface of one side, facing away from the case body 100, of the recess portion 210.

It is to be understood that, when the partition member 200 is disposed on the inner surface of the case body 100, a part of the partition member 200 is recessed toward the outside of the case body 100 to form the recess portion 210, and the recess portion is inserted into the through hole 101. The first anti-fire member 300 is disposed on the connection surface 211 of the recess portion 210 and covers the connection surface 211. In this case, the connection surface 211 is the surface of the outward protruding side of the recess portion 210, that is, the surface of the outward protruding side of the recess portion 210 is covered with the first anti-fire member 300. When the partition member 200 is disposed on the outer surface of the case body 100, a part of the partition member 200 is recessed toward the inside of the case body 100 to form the recess portion 210, and the recess portion is inserted into the through hole 101. The first anti-fire member 300 is disposed on the connection surface 211 of the recess portion 210 and covers the connection surface 211 of the recess portion 210. In this case, the connection surface 211 is the surface of the inward concave side of the recess portion 210, that is, the surface of the inward concave side of the recess portion 210 is covered with the first anti-fire member 300.

Due to such an arrangement, when thermal runaway occurs in one of the battery cells 20 in the case body 100, the high-temperature gas generated in the battery cell 20 due to the thermal runaway melts through the corresponding recess portion 210 and is discharged from the corresponding through hole 101 to the outside of the case body 100. When the discharged high-temperature gas diffuses outside the case body 100, the discharged high-temperature gas can be blocked by the first anti-fire member 300 disposed on the recess portion 210 inserted into other through holes 101, thereby reducing the potential risk of thermal runaway propagation.

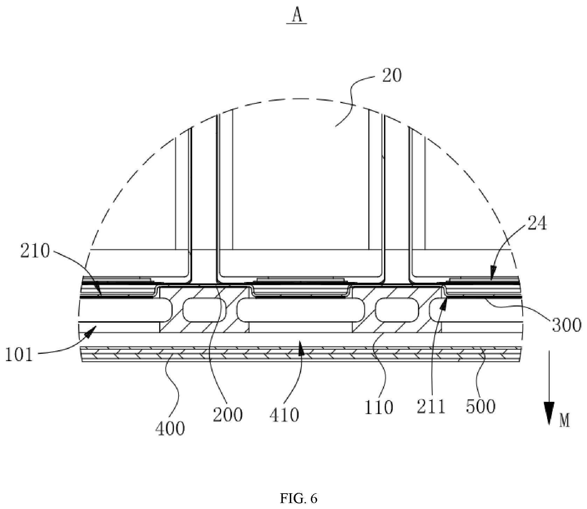

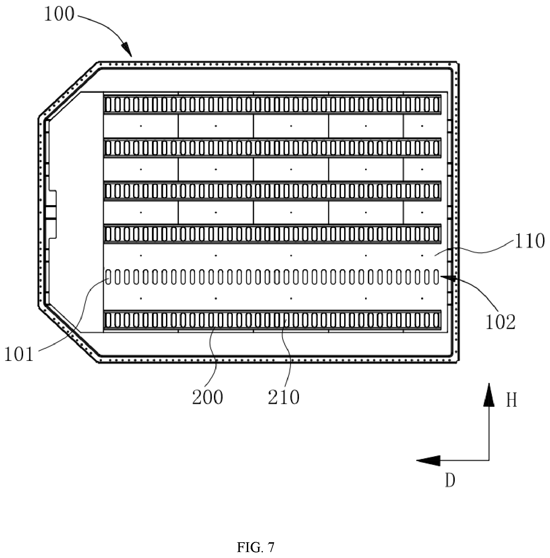

Referring to FIGs. 6 and 7, in some embodiments, the partition member 200 is disposed on the inner surface of the case body 100.

The partition member 200 may be disposed on the inner surface of the case body 100. Specifically, the partition member 200 may be fixedly adhered to the inner surface of the case body 100 by adhesive application, and blocks the through hole 101 on the case body 100 on one side inside the case body 100, thereby preventing impurities such as metal particles outside the case body 100 from entering the case body 100.

Due to such an arrangement, when the partition member 200 is disposed on the inner surface of the case body 100, the partition member 200 is recessed toward the outside of the case body 100 to form the recess portion 210, and the recessed portion is inserted into the corresponding through hole 101. The first anti-fire member 300 is disposed on the recess portion 210 that is inserted into the through hole 101, such that the first anti-fire member 300 covers the surface of one side, facing the outside of the case body 100, of the recess portion 210. Meanwhile, other parts of the partition member 200 are shielded by the case body 100, such that the protective effect of the first anti-fire member 300 on the recess portion 210 is improved, thereby effectively reducing the potential risk of thermal runaway propagation when thermal runaway occurs in the battery cell 20.

Referring to FIGs. 6 and 7, in some embodiments, the partition member 200 includes at least one of a paraffin layer body, a plastic layer body, and a gelatin layer body.

When thermal runaway occurs in the battery cell 20, the battery cell 20 generates high-temperature gas carrying a large amount of heat due to the thermal runaway. When the high-temperature gas is ejected and contacts the partition member 200, the partition member 200 including at least one of the paraffin layer body, the plastic layer body, and the gelatin layer body can transition to a liquid phase and become melted through, such that the through hole 101 blocked by the partition member 200 is opened, and the high-temperature gas can be promptly discharged out of the case 10.

It should be understood that the partition member 200 includes at least one of a paraffin layer body, a plastic layer body, and a gelatin layer body, and the partition member 200 may further include a plurality of other fusible material layer bodies. The above fusible material layer bodies refer to a class of material layer bodies that, when the temperature rises to a predetermined value, undergoes crystalline destruction due to increased kinetic energy of molecular thermal motion and transitions from a crystalline phase to a liquid phase.

In some embodiments, the partition member 200 may include a plastic layer body, and the plastic layer body may specifically be a low-melting-point plastic, such as polypropylene, polycarbonate, or the like. During the preparation of the plastic layer body, a flat plastic sheet may be softened by heating and then vacuum-adsorbed onto a mold surface, and cooled to form a plastic layer with a preset configuration. The plastic layer body is fixedly adhered to the inner surface of the case body 100 by applying adhesive to the bottom of the plastic layer body.

Due to such an arrangement, when thermal runaway occurs in the battery cell 20 in the case body 100, the heat generated due to the thermal runaway in the battery cell 20 can the partition member 200, such that the through hole 101 can establish communication between the interior and exterior of the case body 100, and the heat generated due to the thermal runaway in the battery cell 20 can be discharged from the through hole 101.

Referring to FIGs. 6 and 7, in some embodiments, the case body 100 includes a bottom plate 110, the through hole 101 is formed in the bottom plate 110, and the partition member 200 is disposed on a surface of the bottom plate 110 proximal to the battery cell 20. An anti-explosion valve 24 of the battery cell 20 faces the partition member 200.

The bottom plate 110 is a base structure of the case body 100. It is to be understood that when the battery cell 20 is assembled into the case body 100, the bottom plate 110 can be used for supporting the battery cell 20.

The bottom plate 110 is provided with through holes 101. Optionally, the through holes 101 may be arranged on the bottom plate 110 in an array. Alternatively, the through holes 101 may also be arranged on the bottom plate 110 in a spaced manner along any direction. Alternatively, the through holes 101 may also be arranged on the bottom plate 110 in a spaced manner in multiple directions. Alternatively, the through holes 101 may be randomly distributed on the bottom plate 110.

It is to be understood that the battery cell 20 is assembled into the case body 100, and the anti-explosion valve 24 of the battery cell 20 faces the partition member 200. When thermal runaway occurs in the battery cell 20, the high-temperature gas that is generated due to the thermal runaway and carries a large amount of heat is ejected from the anti-explosion valve 24 of the battery cell 20 toward the partition member 200, and the partition member 200 can be rapidly melted through, that is, the through hole 101 can be promptly opened, such that the high-temperature gas can be promptly discharged from the through hole 101.

Optionally, the anti-explosion valve 24 of the battery cell 20 may specifically face the recess portion 210; when thermal runaway occurs in the battery cell 20, the high-temperature gas can be ejected from the anti-explosion valve 24 of the battery cell 20 toward the recess portion 210 to enable the recess portion 210 to be rapidly melted through, such that the high-temperature gas can be directed toward the through hole 101 and ejected to the outside of the case body 100, which effectively increases the efficiency of discharging the high-temperature gas out of the case body 100, and effectively mitigates the risk of heat accumulation in the case body 10.

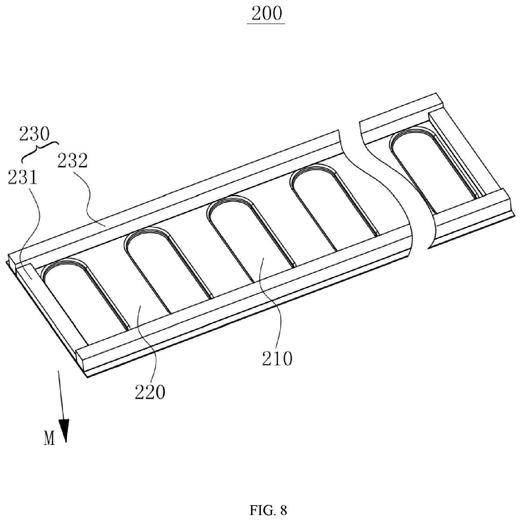

Referring to FIGs. 6 to 8, in some embodiments, the bottom plate 110 is provided with a plurality of through holes 101, and at least a part of the through holes 101 are spaced apart from each other along the first direction D of the bottom plate 110 to form a hole group 102. One or more hole groups 102 are formed on the bottom plate 110, and when the number of the hole groups 102 is at least two, the hole groups 102 are spaced apart from each other along the second direction H of the bottom plate 110. The first direction D intersects with the second direction H.

It is to be understood that the first direction D of the bottom plate 110 intersects with the second direction H of the bottom plate 110. Optionally, the first direction D and the second direction H may be perpendicular to each other. For example, the first direction D may be the length direction of the bottom plate 110, and the second direction H may be the width direction of the bottom plate. The first direction D of the bottom plate 110 may be specifically the direction D in FIG. 7, and the second direction H of the bottom plate 110 may be specifically the direction H in FIG. 7.

The hole group 102 refers to a set of a row of through holes 101 spaced apart from each other along the first direction D of the bottom plate 110. When the battery cells 20 are assembled into the case body 100, the battery cells 20 may be arranged along the first direction D of the bottom plate 110, and the large surfaces between adjacent battery cells 20 are arranged opposite to each other. In this way, the anti-explosion valve 24 of each battery cell 20 may be disposed corresponding to one through hole 101. When thermal runaway occurs in any battery cell 20, the battery cell 20 may eject high-temperature gas through the anti-explosion valve 24 to the partition member 200 covering the corresponding through hole 101, thereby satisfying requirements for addressing thermal runaway in any battery cell 20.

The number of the hole groups 102 may be plural. In this case, the plurality of hole groups 102 may be spaced apart from each other along the second direction H of the bottom plate 110. Referring to FIG. 7, FIG. 7 is a schematic structural view of the interior of a case body 100 according to some embodiments of the present application, which illustrates several hole groups 102 blocked by the partition member 200 and one hole group 102 not blocked by the partition member 200. When the battery cells 20 are assembled into the case body 100, the battery cells 20 may be arranged along the first direction D of the bottom plate 110, and the large surfaces between adjacent battery cells 20 are arranged opposite to each other. In addition, the battery cells 20 may be arranged along the second direction H of the bottom plate 110 to form a plurality of rows. Specifically, the number of rows formed by arranging the battery cells 20 along the first direction D of the bottom plate 110 may be the same as the number of hole groups 102. In this way, the anti-explosion valve 24 of each battery cell 20 may be disposed corresponding to one through hole 101, thereby satisfying requirements for addressing thermal runaway in any battery cell 20.

Referring to FIGs. 6 to 8, in some embodiments, the number of the partition members 200 is the same as the number of the hole groups 102, and each partition member 200 is configured to block all the through holes 101 at locations thereof in the corresponding hole group 102.

Optionally, when the number of the hole groups 102 is one, the number of the partition members 200 may be one, and the partition member 200 is capable of completely covering the hole group 102, such that all the through holes 101 in the hole group 102 are blocked by the partition member 200.

When the number of the hole groups 102 is plural, the hole groups 102 are spaced apart from each other along the second direction H of the bottom plate 110, and the number of the partition members 200 is plural and equals the number of the hole groups 102. Each partition member 200 is capable of covering a corresponding hole group 102, such that each partition member 200 is capable of blocking all the through holes 101 in the corresponding hole group 102.

Due to such an arrangement, when thermal runaway occurs in any battery cell 20 in the case body 100, the high-temperature gas discharged from the anti-explosion valve 24 of the battery cell 20 can melt through one corresponding partition member, such that the corresponding through holes 101 of the corresponding hole group 102 can be opened for discharging the high-temperature gas. However, the probability that the partition members 200 covered on the other hole groups 102 are melted through is relatively low, such that the partition members 200 covered on the other hole groups 102 can continue to operate, and only one partition member 200 corresponding to the battery cell 20 experiencing thermal runaway is required to be replaced, thereby effectively reducing the cost.

Referring to FIGs. 2, 6, and 7, in some embodiments, the case 10 further includes a bottom protective plate 400, the bottom protective plate 400 is disposed on the outer side of the bottom plate 110, and the bottom protective plate 400 and the bottom plate 110 are spaced apart to form an exhaust channel 410. The exhaust channel 410 is in communication with the exterior of the bottom protective plate 400, and the through hole 101 is in communication with the exhaust channel 410.

It is to be understood that the bottom protective plate 400 is configured to be disposed on the outer side of the bottom plate 110 and protect the bottom plate 110.

The bottom protective plate 400 may be fixedly assembled on the bottom plate 110 through a fastener, the bottom protective plate 400 and the bottom plate 110 are spaced apart to form an exhaust channel 410, and the spacing between the bottom protective plate 400 and the bottom plate 110 may be in communication with the exterior of the bottom protective plate 400 and the bottom plate 110. When thermal runaway occurs in the battery cell 20 in the case body 100, the high-temperature gas generated due to the thermal runaway melts through the through hole 101 and is discharged from the through hole 101, and the high-temperature gas discharged from the through hole 101 can be discharged from the exhaust channel 410 to the outside of the bottom protective plate 400, such that on the basis that the bottom protective plate 400 can protect the bottom plate 110, the bottom protective plate 400 imposes a relatively low level of obstruction to the discharge of the high-temperature gas from the through hole 101, thereby effectively ensuring a relatively low probability of accumulation of high-temperature gas in the case body 100.

Specifically, when thermal runaway occurs in the battery cell 20, and the high-temperature gas discharged from the battery cell 20 is discharged from the corresponding through hole 101 to the exhaust channel 410, the high-temperature gas diffuses to other through holes 101, and the first anti-fire member 300 disposed on the surface of one side, facing the exterior of the case body 100, of the recess portion 210 is capable of preventing the contact between the high-temperature gas and the recess portion 210, thereby reducing the probability that the high-temperature gas melts through other through holes 101 and contact other battery cells 20 in which thermal runaway does not occur, and thus reducing the probability of thermal runaway propagation.

Due to such an arrangement, since the bottom protective plate 400 and the bottom plate 110 are spaced apart to form an exhaust channel 410, when thermal runaway occurs in the battery cell 20 in the case 10, the high-temperature gas generated due to the thermal runaway in the battery cell 20 melts through the partition member 200 that blocks the through hole 101, such that the high-temperature gas can be discharged from the through hole 101 into the exhaust channel 410 and then discharged to the outside of the bottom protective plate 400 through the exhaust channel 410.

Referring to FIG. 6, in some embodiments, a second anti-fire member 500 is disposed on the surface of one side, facing the bottom plate 110, of the bottom protective plate 400.

The second anti-fire member 500 is configured to reduce the risk of burning the bottom protective plate 400 when high-temperature gas is discharged from the through hole 101 into the exhaust channel 410. The second anti-fire member 500 may be a structural member with anti-fire effects, and for example, may be a fire-resistant coating layer, a fire-resistant patch, or a fire-resistant adhesive. The second anti-fire member 500 may be fixed to the bottom protective plate 400 by coating, adhesion, or other methods.

Due to such an arrangement, when thermal runaway occurs, and the high-temperature gas is discharged from the case body 100 into the exhaust channel 410 through the through hole 101, the second anti-fire member 500 can protect the bottom protective plate 400, thereby reducing the probability of burning and damaging the bottom protective plate 400 caused by the high-temperature gas.

Referring to FIGs. 6 to 8, in some embodiments, the partition member 200 includes a partition portion 220 and a surrounding barrier portion 230, the partition portion 220 is disposed on the inner surface of the case body 100 and is at least partially configured to block the through hole 101, and the surrounding barrier portion 230 is disposed on the surface of one side, facing the interior of the case body 100, of the partition portion 220.

The partition portion 220 is configured to adhere to the inner surface of the case body 100 and block the through hole 101. The partition portion 220 may be, but is not limited to, a block structure, a sheet structure, a plate structure, or the like.

The surrounding barrier portion 230 is disposed on the surface of one side, facing the interior of the case body 100, of the partition portion 220. The surrounding barrier portion 230 is configured to enclose the surface of one side, facing the interior of the case body 100, of the partition portion 220. When the interior of the case body 100 is subjected to the adhesive application process, the surrounding barrier portion 230 can prevent the adhesive from entering the region enclosed by the surrounding barrier portion 230, so as to reduce the probability of the partition portion 220 being covered with the adhesive, thereby reducing the probability that high-temperature gas cannot melt through the partition portion 220 due to the adhesive.

Specifically, the surrounding barrier portion 230 may be, but is not limited to, a polygonal surrounding barrier structure (e.g., a triangular surrounding barrier or a rectangular surrounding barrier), an annular surrounding barrier structure (e.g., a circular surrounding barrier or an elliptical surrounding barrier), or the like. The surrounding barrier portion 230 may be fixedly assembled on the surface of the partition portion 220, or the surrounding barrier portion 230 and the partition portion 220 may be integrally formed.

Due to such an arrangement, the partition portion 220 of the partition member 200 can be configured to block the through hole 101, and the surrounding barrier portion 230 of the partition member 200 can serve as a surrounding barrier to prevent the adhesive from entering the surrounding barrier portion 230 when the adhesive is applied to the case body 100, so as to reduce the probability that high-temperature gas cannot melt through the partition portion 220 due to the adhesive covering the partition portion 220, and reduce the probability of contact between the adhesive and the anti-explosion valve 24 of the battery cell 20, thereby reducing the probability of failure of the anti-explosion valve 24.

Referring to FIGs. 6 to 8, in some embodiments, along the thickness direction M of the partition portion 220, the projection of the surrounding barrier portion 230 is configured to be capable of surrounding the projection of the anti-explosion valve 24 of the battery cell 20.

It is to be understood that the surrounding barrier portion 230 can serve as a surrounding barrier for the anti-explosion valve 24 of the battery cell 20 along the thickness direction M of the partition portion 220. When the adhesive is applied to the inner surface of the case body 100, the surrounding barrier portion 230 can block the adhesive, thereby preventing the adhesive from flowing onto the partition portion 220, reducing the probability of contact between the adhesive and the anti-explosion valve 24 of the battery cell 20, and thus reducing the risk of failure of the anti-explosion valve 24 due to blocking by the adhesive.

Referring to FIGs. 6 to 8, in some embodiments, the surrounding barrier portion 230 includes two first surrounding barrier structures 231 disposed opposite to each other and two second surrounding barrier structures 232 disposed opposite to each other, both the first surrounding barrier structures 231 and the second surrounding barrier structures 232 are disposed on the partition portion 220, and two opposite ends of each of the first surrounding barrier structures 231 are respectively connected to the two second surrounding barrier structures 232. The height of the first surrounding barrier structure 231 is less than the height of the second surrounding barrier structure 232.

The first surrounding barrier structure 231 may be, but is not limited to, a surrounding plate, a surrounding rod, a surrounding block, or the like. Similarly, the second surrounding barrier structure 232 may be, but is not limited to, a surrounding plate, a surrounding rod, a surrounding block, or the like. The first surrounding barrier structures 231 and the second surrounding barrier structures 232 are sequentially connected end to end to form the surrounding barrier portion 230, and serve as a surrounding barrier for the partition portion 220.

When the battery cell 20 is assembled into the case body 100, the battery cell 20 is disposed on the inner surface of the case body 100 and compresses the surrounding barrier portion 230. Since the height of the first surrounding barrier structure 231 is less than the height of the second surrounding barrier structure 232, the degree of compression applied to the first surrounding barrier structure 231 by the battery cell 20 is relatively small, or the first surrounding structure 231 is not compressed by the battery cell 20, such that the first surrounding barrier structure 231 exerts less or no reaction force on the battery cell 20. Therefore, the reaction force from the surrounding barrier portion 230 on the battery cell 20 is relatively smaller, thereby reducing the probability of the battery cell 20 being bounced upward.

Illustratively, in some specific implementations, the bottom plate 110 of the case body 100 is provided with a plurality of through holes 101, and the plurality of through holes 101 can be spaced apart from each other along the width of the bottom plate 110 to form a plurality of hole groups 102. The partition members 200 are in a strip-shaped structure, the number of the partition members 200 is the same as the number of the hole groups 102, the length of each partition member 200 is arranged along the length of the bottom plate 110, and each partition member 200 is capable of blocking all the through holes 101 included in the corresponding hole group 102 at the locations of the through holes. Each partition member 200 is recessed to form a plurality of recess portions 210, each recess portion 210 is inserted into a corresponding through hole 101, and the surface of one side, facing the exterior of the case body 100, of each recess portion 210 is coated with a fire-resistant coating layer. A bottom protective plate 400 is further disposed on the exterior of the case body 100. The bottom protective plate 400 is assembled on the outer surface of the bottom plate 110 of the case body 100 through a fastener, and spaced apart from the outer surface of the bottom plate 110 to form an exhaust channel 410. Each of the through holes 101 is in communication with the exhaust channel 410. The partition member 200 includes a strip-shaped partition sheet and a surrounding barrier portion 230 integrally formed on the surface of one side, facing the interior of the case body 100, of the partition sheet. The surrounding barrier portion 230 includes two first surrounding barrier structures 231 and two second surrounding barrier structures 232. The two first surrounding barrier structures 231 are respectively disposed at two short sides of the partition sheet, the two second surrounding barrier structures 232 are respectively disposed at two long sides of the partition sheet, and the first surrounding barrier structures 231 and the second surrounding barrier structures 232 are sequentially connected end to end. When the battery cells 20 are assembled into the case body 100, the battery cells 20 can be arranged in sequence along the length direction of the bottom plate 110, such that the anti-explosion valves 24 of the battery cells 20 in the same row can be arranged in one-to-one correspondence with the respective recess portions 210 of the corresponding partition member 200. Meanwhile, in the battery cells 20 in the same row, each battery cell 20 only compresses the second surrounding barrier structures 232. Since the height of the first surrounding barrier structure 231 is less than the height of the second surrounding barrier structure 232, the head and tail battery cells 20 in the battery cells 20 in the same row also do not compress the first surrounding structures 231. Therefore, the first surrounding barrier structures 231 does not exert a reaction force on the head and tail battery cells 20 in the battery cells 20 in the same row, thereby effectively reducing the reaction force acting on the head and tail battery cells 20 in the battery cells 20 in the same row, ensuring the assembly stability of the battery cells 20, and preventing the battery cells 20 from being bounced upward.

Referring to FIG. 2, in a second aspect, the embodiments of the present application further provide a battery 1100. The battery includes a battery cell 20 and the above case 10. The battery cell 20 is disposed in the case body 100 of the case 10.

The battery 1100 provided in the embodiments of the present application includes the above case 10. On the basis that, for the case 10 described above, the partition member 200 can be used for blocking the through hole 101 to reduce the probability of insulation failure caused by the ingress of metal particles outside the case body 100 into the case body 100, the probability of insulation failure of the battery 1100 is also relatively low.

Referring to FIGs. 2, 6, and 7, in some embodiments, the number of the battery cells 20 is plural, the plurality of battery cells 20 are accommodated in the case body 100, and the anti-explosion valve 24 of each of the battery cells 20 faces the corresponding through hole 101 formed in the case body 100.

It is to be understood that the anti-explosion valve 24 of each of the battery cells 20 faces the corresponding through hole 101 formed in the case body 100, and the through hole 101 is blocked by the partition member 200. When thermal runaway occurs in any battery cell 20, the high-temperature gas is ejected from the anti-explosion valve 24 of the battery cell 20 toward the through hole 101, and after the high-temperature gas contacts the partition member 200, the partition member 200 can be rapidly melted through. Therefore, the high-temperature gas can be promptly discharged to the outside of the case body 100 from the through hole 101 to reduce the probability of the risk of combustion or explosion caused by the accumulation of high-temperature gas in the case body 100.

Referring to FIG. 1, in a third aspect, the embodiments of the present application further provide an electric device. The electric device includes the above battery.

It is to be understood that the electric device may be, but is not limited to, a mobile phone, a computer, a toy, an electric vehicle, a ship, a spacecraft, or the like. In some specific implementations, the electric device may be the vehicle 1000, and the battery 1100 may be used for providing electrical energy for the vehicle 1000.

The electric device provided in the embodiments of the present application includes the above battery 1100. On the basis of the relatively low probability of insulation failure of the above battery 1100, the probability of electrical leakage of the electric device is also lower.

The above are only preferred embodiments of the present application, and are not intended to limit the embodiments of the present application. Any modification, equivalent substitution, improvement, and the like made within the spirit and principle of the embodiments of the present application shall all fall within the protection scope of the embodiments of the present application.

## Claims

1. a case, configured to accommodate a battery cell, wherein the case comprises:
a case body, the case body being provided with a through hole; and
a partition member, the partition member being disposed on the case body, wherein the partition member blocks the through hole at a location thereof, and the partition member is configured to be capable of being melted through when thermal runaway occurs in the battery cell.

2. The case according to claim 1, wherein a part of the partition member is recessed toward the case body to form a recess portion, and the recess portion is inserted into the through hole.

3. The case according to claim 2, wherein the case further comprises a first anti-fire member, the recess portion has a connection surface disposed opposite to the case body, and the first anti-fire member is disposed on the connection surface.

4. The case according to any one of claims 1 to 3, wherein the partition member is disposed on an inner surface of the case body.

5. The case according to any one of claims 1 to 4, wherein the partition member comprises at least one of a paraffin layer body, a plastic layer body, and a gelatin layer body.

6. The case according to any one of claims 1 to 5, wherein the case body comprises a bottom plate, the through hole is formed in the bottom plate, and the partition member is disposed on a surface of the bottom plate proximal to the battery cell; an anti-explosion valve of the battery cell faces the partition member.

7. The case according to claim 6, wherein the bottom plate is provided with a plurality of through holes, and at least a part of the through holes are spaced apart from each other along a first direction of the bottom plate to form a hole group; one or more hole groups are formed on the bottom plate, and when a number of the hole groups is at least two, the hole groups are spaced apart from each other along a second direction of the bottom plate, wherein the first direction intersects with the second direction.

8. The case according to claim 7, wherein a number of the partition members is the same as the number of the hole groups, and each partition member is configured to block all the through holes at locations thereof in the corresponding hole group.

9. The case according to any one of claims 6 to 8, wherein the case further comprises a bottom protective plate, the bottom protective plate is disposed on an outer side of the bottom plate, and the bottom protective plate and the bottom plate are spaced apart to form an exhaust channel, the exhaust channel being in communication with an exterior of the bottom protective plate, and the through hole being in communication with the exhaust channel.

10. The case according to claim 9, wherein a second anti-fire member is disposed on a surface of one side, facing the bottom plate, of the bottom protective plate.

11. The case according to any one of claims 6 to 10, wherein the partition member comprises a partition portion and a surrounding barrier portion, the partition portion is disposed on the inner surface of the case body and is at least partially configured to block the through hole, and the surrounding barrier portion is disposed on a surface of one side, facing an interior of the case body, of the partition portion.

12. The case according to claim 11, wherein along a thickness direction of the partition portion, a projection of the surrounding barrier portion is configured to be capable of surrounding a projection of the anti-explosion valve of the battery cell.

13. The case according to claim 12, wherein the surrounding barrier portion comprises two first surrounding barrier structures disposed opposite to each other and two second surrounding barrier structures disposed opposite to each other, both the first surrounding barrier structures and the second surrounding barrier structures are disposed on the partition portion, and two opposite ends of each of the first surrounding barrier structures are respectively connected to the two second surrounding barrier structures; a height of the first surrounding barrier structure is less than a height of the second surrounding barrier structure.

14. A battery, comprising a battery cell and the case according to claims 1 to 13, wherein the battery cell is disposed in the case body of the case.

15. The battery according to claim 14, wherein a number of the battery cells is plural, the plurality of battery cells are accommodated in the case body, and the anti-explosion valve of each of the battery cells faces the corresponding through hole formed in the case body.

16. An electric device, comprising the battery according to claims 14 and 15.
